Europäisches Patentamt

(19) European Patent Office

Office européen des brevets

(11) Veröffentlichungsnummer: **0 094 623**
**B1**

(12) EUROPÄISCHE PATENTSCHRIFT

(45) Veröffentlichungstag der Patentschrift:
09.04.86

(21) Anmeldenummer: 83104674.3

(22) Anmeldetag: 11.05.83

(51) Int. Cl.⁴: **H 04 M 3/24,** H 04 Q 3/54,
G 06 F 11/34

(54) Schaltungsanordnung für Fernmeldevermittlungsanlagen, insbesondere Fernsprechvermittlungsanlagen, mit einer Abwicklung der Vermittlungsschaltvorgänge dienenden Multirechnersystemen.

(30) Priorität: 14.05.82 DE 3218277

(43) Veröffentlichungstag der Anmeldung:
23.11.83 Patentblatt 83/47

(45) Bekanntmachung des Hinweises auf die Patenterteilung:
09.04.86 Patentblatt 86/15

(84) Benannte Vertragsstaaten:
FR GB SE

(56) Entgegenhaltungen:
EP - A - 0 067 324
WO - A - 82/01095
DE - A - 2 708 244
DE - B - 2 749 780

PATENTS ABSTRACTS OF JAPAN, Band 6, Nr. 100, 9. Juni 1982, Seite P-121(978)
FOURTH INTERNATIONAL CONFERENCE ON SOFTWARE ENGINEERING FOR TELECOMMUNICATION SWITCHING SYSTEMS", 20.-24. Juli 1981, Seiten 124-129, IEE, London, GB., M. MAISONNEUVE et al.: "E10S operating system for a distributed architecture"

(73) Patentinhaber: Siemens Aktiengesellschaft, Berlin und München Wittelsbacherplatz 2, D-8000 München 2 (DE)

(72) Erfinder: Hürlimann, Gerd., Erikastrasse 18 b, D-8034 Germering (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Schaltungsanordnung für Datenverarbeitungsanlagen, insbesondere in Fernmelde- vorzugsweise Fernsprechvermittlungsanlagen, in denen zur Abwicklung der Vermittlungsvorgänge Multirechnersysteme vorgesehen sind, die jeweils aus einem Hauptrechner, der insbesondere gedoppelt ist, und einer Anzahl Unterrechnern bestehen, welche im Datenaustausch untereinander und mit dem Hauptrechner stehen, und deren Zusammenarbeit durch den ihnen übergeordneten Hauptrechner koordiniert wird, und in denen Logikanalysatoren vorgesehen sind, die zur Auffindung von Fehlern jeweils den von einem Unterrechner ausgehenden und/oder zu ihm hin fließenden Datenstrom aufzeichnen und speichern, wobei durch eine einem Logikanalysator vorgebbare Datenkombination dessen Aufzeichnungsvorgang gestartet wird und durch eine im Logikanalysator vorgebbare Datenfolge die Übereinstimmung derselben mit dem jeweiligen Datenstrom überprüft und der Aufzeichnungsvorgang auf Grund einer Abweichung beendet wird.

Eine Schaltungsanordnung dieser Art ist durch die Zeitschrift "Markt & Technik, Wochenzeitschrift für Elektronik" 51/52, 1981 und 1, 1982 (Markt & Technik Verlagsgesellschaft, Hans-Pinsel-Str.2, Haar bei München) bekannt. In verschiedenen Artikeln wird der Logikanalysator beschrieben und u.a. wird seine Anwendung in Multirechnersystemen erwähnt. Diese sind u.a. auch in der DE—AS 2 708 244, sowie in "Elektronische Rechenanlagen" 1982, Seite 3ff und Seite 107ff unter dem Begriff "Mehrprozessorsysteme" beschrieben.

In Mehrprozessorsystemen stehen mehrere Unterrechner untereinander und mit einem Hauptrechner im Datenaustausch. Der Hauptrechner dient u.a. auch zur Koordinierung der Zusammenarbeit zwischen den Unterrechnern. Die Unterrechner können in der Weise für eine Abwicklung artspezifischer Rechenprozeduren eingerichtet sein, daß jeder dieser Rechner Rechenprozeduren nur einer oder wenigstens einer bestimmten Art aber nicht aller möglichen verschiedenen Arten durchführt. Hierzu sei auf die DE—OS 2 743 923 hingewiesen. Durch die Einrichtung von Unterrechnern und einem ihnen gemeinsamen Hauptrechner anstelle eines einzigen Universalrechners wird die Abwicklung der Steuerprozeduren insgesamt erheblich beschleunigt, indem dabei jede Steuerprozedur in mehrere Untereprozeduren unterteilt ist und diese teilweise gleichzeitig durchgeführt werden, wobei zu jeweils einem Zeitpunkt auch Unterprozeduren ablaufen können, die zu verschiedenen Steuerprozeduren gehören. Durch die Verwendung eines Mehrprozessorsystems anstelle eines einzigen komplexen Rechners wird also eine höhere Leistungsfähigkeit bezüglich der Gesamtheit der auszuführenden Rechen- und Steueroperationen erzielt.

In solchen Mehrprozessorsystemen stehen also, gemäß der Aufteilung jeder der Steuerprozeduren in jeweils mehrere Unterprozeduren, mehrere Unterrechner untereinander und mit einem Hauptrechner im Datenaustausch. Ein besonderes Problem in solchen Systemen stellt die Auffindung von Fehlern dar. Diese können hardwaremäßig oder softwaremäßig bedingt sein. Dabei kann es sein, daß ein Fehler oder eine Falschfunktion in einem der Unterrechner unbrauchbare Informationen erzeugt, daß aber die Auswirkung dieses Fehlverhaltens auf Grund des gegenseitigen und sehr komplexen gesamten Datenaustausches unter den Rechnern an einer ganz anderen Stelle erfolgt.

Für die Erfindung besteht nun die Aufgabe, eine Schaltungsanordnung der eingangs genannten Art so auszugestalten, daß ein Auffinden und Lokalisieren von Fehlern und Fehlfunktionen sowie eine Festellung von deren letzten Ursachen wesentlich erleichtert wird, und daß für die daraus resultierende Wartung eine wirtschaftlich möglichst günstige Voraussetzungen geschaffen wird.

Die Erfindung löst die gestellte Aufgabe dadurch, daß einer Mehrzahl von, insbesondere jedem der Unterrechner, gegebenenfalls auch dem Hauptrechner, je ein eigener Logikanalysator zugeordnet ist, daß eine von einem der Logikanalysatoren aus dem betreffenden Datenstrom abgeleitete Startinformation nicht nur bei ihm selbst den Aufzeichnungsvorgang startet, sondern darüberhinaus zu allen anderen Logikanalysatoren übertragen wird, wodurch auch hier die einzelnen Aufzeichnungsvorgänge gestartet werden, und daß bei Eintreten der Abweichung des Datenstromes von der vorgegebenen Datenfolge an einem Logikanalysator nicht zur dessen Aufzeichnungsvorgang beendet wird, sondern ein Beendigungssignal zu jedem der anderen Logikanalysatoren übertragen wird, welches dort eine Beendigung jedes der Protokolliervorgänge bewirkt, und daß eine den Unterrechnern gemeinsame Auswerteeinrichtung entweder ebenfalls dieses Beendigungssignal empfängt und daraufhin oder in regelmäßigen Zeitabständen Selbsttätig einzeln nacheinander jedem der Logikanalysatoren ein Abrufsignal überträgt, woraufhin jeweils nach einem Abrufsignal je ein Logikanalysator den aufgezeichneten Datenstrom zu der Auswerteeinrichtung überträgt, die jedem dieser Datenströme zu anschließender Auswertung speichert.

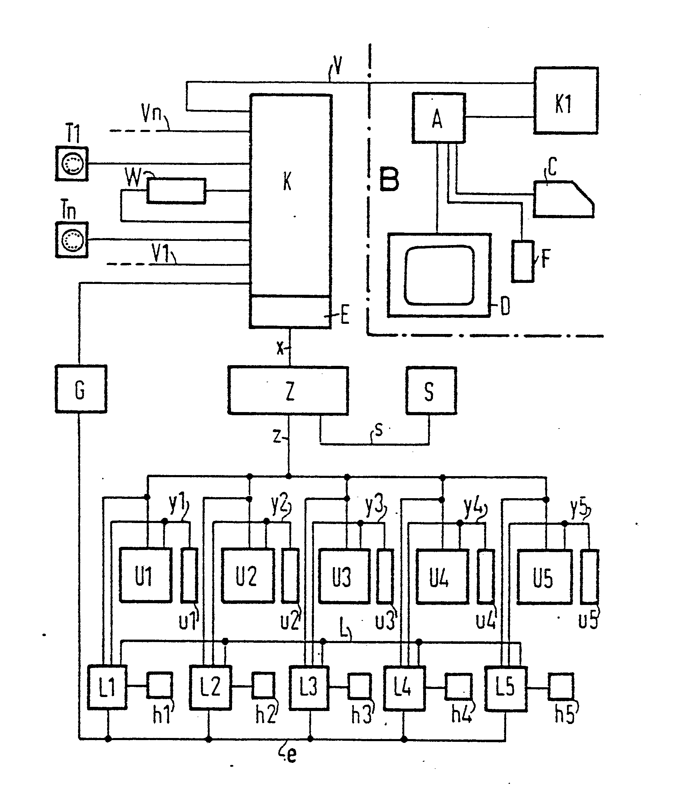

In der Zeichnung ist ein Ausführungsbeispiel der Erfindung nur in wesentlich zu ihrem Verständnis beitragenden Bestandteilen dargestellt.

An ein Koppelfeld K mit Umkehrgruppierung sind Teilnehmerstellen T1 bis Tn sowie Verbindungsleitungen V1 und V angeschlossen, welche Verbindungsleitungen für ankommende Verbindungen, für abgehende Verbindungen und doppelgerichtete Verbindungsleitungen sein können. Außerdem sind Verbindungssätze W für Internverbindungen vorgesehen. Diese Verbindungssätze sind mit zwei Anschlüssen an das Koppelfeld K, und zwar an zwei verschiedene seiner Eingänge angeschaltet. Das Koppelfeld K möge als Koppelfeld mit Umkehrgruppierung aufgebaut sein, wie es z.B. in der deutschen Patentschrift 1801658 erläutert ist. Für die Herstellung der Verbindungen ist eine Koppelfeldeinstelleinrichtung E vorgesehen, die ihre Steuerbefehle über ein nicht gezeigtes Arbeitsfeldsteuerwerk von einem Zentralsteuerwerk Z erhält. Diesem ist ein zentraler Speicher S zugeordnet. — Die im linken oberen und mittleren oberen Teil der Zeichnung angedeutete Fernmeldevermittlungsanlage, die vorzugsweise eine Fernsprechvermittlungsanlage ist, aber auch eine Fernschreibvermittlungsanlage oder eine Datenvermittlungsanlage sein kann, kann auch als Zeitmultiplex-Vermittlungsanlage, insbesondere als PCM-Fernsprechvermittlungsanlage realisiert sein.

Darüberhinaus kann die Anordnung auch so ausgestaltet werden, daß die Unterrechner dazu dienen, das Koppelfeld dezentral zu steuern. Sie können auch jeweils zur Steuerung eines Teiles einer in mehrere Teile aufgeteilten Vermittlungsanlage dienen.

Das Zentralsteuerwerk Z stellt einen Hauptrechner dar. Über eine mehradrige Leitung steht es mit den Koppelfeldeinstelleinrichtungen (E) einer Mehrzahl von Koppelfeldteilen in Verbindung, wie es aus der zuletzt genannten deutschen Patentschrift hervorgeht. Es ist ein Leitungssystem z vorgesehen, über welches der Hauptrechner Z mit einer Anzahl von Unterrechnern U1 bis U5 in Verbindung steht. Das Leitungssystem z möge als mehradrige Leitung ausgebildet sein.

Der Hauptrechner Z steht mit den Unterrechnern U1 bis U5 in einem ständigen Datenaustausch. Die Unterrechner dienen zur Durchführung und Steuerung von Prozessen, die sie für den Hauptrechner Z ausführen. Der Hauptrechner Z koordiniert die von ihm initiierten und den einzelnen Unterrechnern übertragenen Prozesse. Er erteilt also Aufträge jeweils an einen der Unterrechner und nimmt wiederum die von ihnen erarbeiteten Ergebnisse entgegen. Die Unterrechner dienen zur Erhöhung der Leistungsfähigkeit des Hauptrechners, in dem von den verschiedenen Unterrechnern gleichzeitig unterschiedliche Prozesse durchgeführt werden können, die gemeinsam zu einem Steuervorgang gehören können, der vom Hauptrechner Z durchgeführt wird. — Multirechnersysteme, auch als Mehrprozessorsysteme bezeichnet, sind an sich bekannt; einleitend wurde hierzu bereits auf verschiedene Literaturstellen hingewiesen.

Die Arbeitsweise der Unterrechner ist nicht darauf beschränkt, vom Hauptrechner Z Aufträge zu empfangen und deren Ergebnisse jeweils wieder an den Hauptrechner abzuliefern. Darüber hinaus ist vielmehr auch vorgesehen, über das Leitungssystem Z auch Daten von Unterrechner zu Unterrechner direkt zu übertragen. Auch dies geschieht unter der koordinierenden Steuerung des Hauptrechners Z.

Der Hauptrechner Z kann hinsichtlich des Leitungssystems z eine Zuteilerfunktion ausüben, wie sie z.B. durch die deutsche Patentschrift 2 327 669 bekannt ist. Darüber hinaus ist es auch möglich, das Leitungssystem z im Zeitmultiplex zu betreiben, und zwar in der Weise, daß für jede Verkehrsbeziehung zwischen dem Hauptrechner einerseits und jedem der Unterrechner andererseits sowie für jede Verkehrsbeziehung zwischen jedem der Unterrechner einerseits und jedem der übrigen Unterrechner andererseits je ein Zeitkanal zur Verfügung steht. Darüber hinaus ist es auch möglich, das Leitungssystem z so auszubilden, daß anstelle solcher Zeitkanäle eine größere Anzahl individueller Verbindungsleitungen vorgesehen ist, wobei also jedem der genannten Zeitkanäle je eine Verbindungsleitung entspricht.

Der Hauptrechner Z steht also in einem ständigen Datenaustausch mit den Unterrechnern. Unter seinem koordinierend steuernden Einfluß stehen auch die Unterrechner untereinander in einem ständigen gegenseitigen Datenaustausch. Es fließt also vom und zum Hauptrechner Z über das Leitungssystem z dauernd ein Datenstrom; ferner fließt von und zu jedem der Unterrechner U1 bis U5 beständig ein Datenstrom. Bei jeweils einem Unterrechner besteht der ihn betreffende Datenstrom teilweise aus Daten die vom und zum Hauptrechner fließen und teilweise aus Daten die zu oder von den anderen Unterrechnern fließen.

Jeder der Unterrechner U1 bis U5 ist mit einem eigenen Speicher u1 bis u5 ausgerüstet. Jeder der Unterrechner verfügt also über individuell zugeordnete Speicherkapazität, die jeder der Unterrechner für die Durchführung der einzelnen Aufgaben in Anspruch nimmt. Zwischen einem Unterrechner und dem ihm jeweils zugeordneten Speicher findet also ebenfalls ein Datenaustausch statt, der über das jeweils hierfür vorgehene interne Leitungssystem y1 bis y5 abgewickelt wird. Über jedes dieser internen Leitungssysteme fließt also ebenfalls ein Datenstrom, der teilweise von jeweils einem Unterrechner zu dem ihm zugeordneten individuellen Speicher und teilweise in umgekehrter Richtung verläuft.

Jedem der Unterrechner U1 bis U5 ist ein Logikanalysator L1 bis L5 individuell zugeordnet. Es wäre auch möglich, nur einem Teil der Unterrechner je einen Logikanalysator zuzuordnen. Logikanalysatoren sind durch die Fachliteratur bereits allgemein bekannt, und es gibt eine Vielzahl von Veröffentlichungen, von denen einige einleitend bereits erwähnt wurden.

Jeder der Logikanalysatoren, z.B. L1, ist mit dem Leitungssystem z und mit dem internen Leitungssystem des betreffenden Unterrechners verbunden. Ferner sind die Logikanalysatoren L1 bis L5 über eine Steuerleitung L untereinander verbunden. Ferner kann jeder der Logikanalysatoren an einen Eingang des Koppelfeldes K angeschlossen sein, oder sie sind — wie in der Zeichnung dargestellt — über ein gemeinsames Leitungssystem e und eine weiter unten noch genauer erläuterte Einrichtung G mit einem Eingang des Koppelfeldes K verbunden.

Die Logikanalysatoren dienen dazu, zwecks Auffindung von Fehlern jeweils den von einem Unterrechner ausgehenden und/oder den zu ihm hin fließenden Datenstrom aufzuzeichnen und zu speichern. Hierzu ist jeder Logikanalysator mit einem eigenen Speicher ausgestattet. Um den Aufzeichnungsvorgang eines Logikanalysators zu starten, kann ihm eine bestimmte Datenkombination vorgegeben werden. Eine diesem Zweck dienende Datenkombination kann auch eine Folge mehrerer nacheinander auftretender Datenkombinationen umfassen. Ferner wird einem Logikanalysator eine Datenfolge eingegeben, anhand deren er eine Übereinstimmung derselben mit dem jeweiligen Datenstrom zu überprüfen vermag. Der Protokolliervorgang eines Logikanalysators wird aufgrund einer Abweichung zwischen der Datenfolge und dem Datenstrom beendet. Der jeweilige Logikanalysator erkennt eine solche Abweichung und beendet dann selbsttätig den Aufzeichnungsvorgang.

Wie bereits erwähnt wurde, kann jeder Logikanalysator mit einem Eingang des Koppelfeldes K verbunden sein oder alle Logikanalysatoren sind gemeinsam an einen Koppelfeldanschluß angelegt. Das Koppelfeld steht über Verbindungsleitungen — wie bereits erwähnt — mit anderen Vermittlungsstellen in Verbindung, z.B. über die Verbindungsleitung V mit dem Koppelfeld K1 einer fernen Vermittlungsstelle B. In dieser möge sich eine Überwachungseinrichtung befinden, die aus einer Auswerteeinrichtung A, einem Datensichtgerät D, einer Dateneingabeeinrichtung C und weiteren nicht gezeigten Teileinrichtungen bestehen möge. Mit Hilfe der Dateneingabeeinrichtung C und über die Auswerteeinrichtung A besteht nun die Möglichkeit, eine Verbindung über die Verbindungsleitung V, die Koppelfelder K und K zu den Logikanalysatoren L1 bis L5 herzustellen. Handelt es sich um Fernsprechvermittlungsanlagen, so wird eine solche Verbindung also über Fernsprechverbindungswege hergestellt, bei Fernschreibvermittlungseinrichtungen über Fernschreibverbindungswege usw..

Wird nun in der beschriebenen Weise eine Verbindung zu einem Logikanalysator hergestellt, so kann über die Dateneinmgabeeinrichtung C einem der Logikanalysatoren eine Datenkombination zum Starten des Aufzeichnungsvorganges vorgegeben werden und ferner eine Datenfolge zur Überprüfung der Übereinstimmung mit einem bestimmten Teil des Datenstromes der zum und/oder vom betreffenden Unterrechner, und zwar entweder über das Leitungssystem z oder über das interne Leitungssystem, z.B. y1, fließt.

Es ist vorgesehen, daß nur einem Logikanalysator eine Datenkombination zum Starten eines Aufzeichnungsvorganges vorgegeben wird. Eine Datenfolge zur Überprüfung der Übereinstimmung zwischen dem jeweiligen Datenstrom einerseits und der Datenfolge andererseits wird jedem der Logikanalysatoren mit Hilfe der Dateneingabeeinrichtung C vorgegeben. Hierzu werden über die Auswerteeinrichtung A nacheinander Verbindungen zu den verschiedenen Logikanalysatoren aufgebaut. Jeder der Logikanalysatoren speichert ihm vorgegebene Daten in seinem Speicher.

Wie bereits erwähnt wurde, sind die Logikanalysatoren L1 bis L5 untereinander über eine Steuerleitung L verbunden. Wie ebenfalls bereits erwähnt, erhält nur einer der Logikanalysatoren eine Datenkombination zum Starten eines Aufzeichnungsvorganges. Es ist jedoch auch möglich, zwei oder mehr Logikanalysatoren je eine solche Datenkombination zu geben.

Ein Logikanalysator, dem eine Datenkombination zum Starten eines Aufzeichnungsvorganges vorgegeben ist, leitet aus dem betreffenden Datenstrom zu und/oder von dem betreffenden Unterrechner eine Startinformation ab, mit deren Hilfe er bei sich selbst den Aufzeichnungsvorgang startet. Tritt also die dem jeweiligen Logikanalysator vorgegebene Datenkombination in dem Datenstrom auf, so wird dies von dem betreffenden Logikanalysator erkannt, der daraus die genannte Startinformation ableitet.

Der betreffende Logikanalysator startet nun nicht nur bei sich selbst den Aufzeichnungsvorgang sondern überträgt die Startinformation außerdem zu allen anderen Logikanalysatoren über die Steuerleitung L. Dadurch wird auch in diesen anderen Logikanalysatoren jeweils ein Aufzeichnungsvorgang gestartet. Es beginnen also bei sämtlichen Logikanalysatoren gleichzeitig die Aufzeichnungsvorgänge. Jeder der Logikanalysatoren schreibt also den Datenstrom zu den von dem betreffenden Unterrechner mit und speichert diese Daten jeweils in seinem Speicher.

Wie bereits erwähnt wurde, wird der Aufzeichnungsvorgang aufgrund einer Abweichung zwischen dem genannten Datenstrom und der vorgegebenen Datenfolge beendet. Eine solche Abweichung kann nun bei jedem der Logikanalysatoren, bei dem ein Aufzeichnungsvorgang läuft, erkannt werden. Erkennt nun ein Logikanalysator eine solche Abweichung, so beendet er seinen Aufzeichnungsvorgang. Dies kann unverzüglich geschehen oder auch mit einer ihm des weiteren vorgegebenen Zeitverzögerung, wodurch auch noch die datenmäßigen Ereignisse im Anschluß an das Eintreten der Abweichung erfaßt werden können. Der betreffende Logikanalysator, der die Abweichung erkannt hat, beendet nicht nur seinen eigenen Aufzeichnungsvorgang, sondern er überträgt außerdem ein Beendigungssignal über die gemeinsame Steuerleitung L zu jedem der anderen Logikanalysatoren. Dieses Beendigungssignal bewirkt in den anderen Logikanalysatoren jeweils in der gleichen Weise die Beendigung der dortigen Aufzeichnungsvorgänge.

Das Beendigungssignal wird von dem betreffenden Logikanalysator auch der gemeinsamen Auswerteeinrichtung A übertragen. Diese Auswerteeinrichtung ist den Logikanalysatoren L1 bis L5 gemeinsam.

Zur Übertragung des Beendigungssignales von dem betreffenden Logikanalysators zu der gemeinsamen Auswerteeinrichtung A wird eine Verbindung von dem betreffenden Logikanalysator über Fernsprechverbindungswege (bzw. Fernschreibverbindungsweg) zu der Auswerteeinrichtung A hergestellt. Diese Verbindungsherstellung wird von dem betreffenden Logikanalysator initiiert und aufgrund gespeicherter Wählinformationen selbsttätig durchgeführt.

Hat die Auswerteeinrichtung A ein Beendigungssignal empfangen, so überträgt sie nacheinander jedem der Logikanalysatoren je ein Abrufsignal. Hierzu stellt die Auswerteeinrichtung einzeln nacheinander in der angegebenen Weise eine Verbindung zu jedem der Logikanalysatoren her. Aufgrund eines Abrufsignales überträgt jeweils ein Logikanalysator den von ihm gespeicherten Datenstrom zu der Auswerteeinrichtung A. Diese empfängt den betreffenden Datenstrom und speichert ihn zu anschließender Auswertung. Hierfür kann auch ein externer Datenträger F vorgesehen werden (Hintergrundspeicher). Die Auswerteeinrichtung A baut also selbsttätig zu jedem der Logikanalysatoren je eine Fernsprechverbindung auf, um über diese jeweils das Abrufsignal zu übertragen und den jeweiligen gespeicherten Datenstrom zu empfangen.

Ist dagegen ein gemeinsamer Koppelfeldanschluß vorgesehen (wie in der Zeichnung dargestellt) so stellt die Auswerteeinrichtung A nur eine Verbindung her und ruft nacheinander von jedem der Logikanalysatoren den gespeicherten Datenstrom ab. Abweichend von den zuvor beschriebenen Vorgängen kann auch vorgesehen werden, daß die Auswerteeinrichtung A in regelmäßigen Zeitabständen selbsttätig eine Verbindung zu den Logikanalysatoren aufbaut und jedem ein Abrufsignal überträgt. In diesem Fall erfolgt eine Übertragung aufgezeichneter und gespeicherter Daten von den Logikanalysatoren nur dann, wenn von diesen entsprechende Aufzeichnungsvorgänge durchgeführt worden sind seit dem letzten Abruf.

Die Auswerteeinrichtung A enthält u.a. einen Auswertungsrechner, der in an sich bekannter Weise in der Lage ist, die verschiedenen Datenströme einer gemeinsamen Beurteilung zu unterziehen und entsprechende Fehler, die hardhardwaremäßige Fehler oder auch solftwaremäßige Fehler sein können, festzustellen; solche Fehler können aber auch tiefere Ursachen haben, z.B. kann es sich um Unzulänglichkeiten bei der Programmierung des Multirechnersystems handeln, die nur in ganz außergewöhnlichen nicht vorhergesehenen Betriebsfällen überhaupt in Erscheinung treten.

Die Logikanalysatoren können über ein gemeinsames Leitungssystem (JEC—BUS) auch direkt mit der Auswertungseinrichtung verbunden sein. Ist aber — wie dargestellt — die Auswertungseinrichtung nicht direkt vor Ort vorhanden, so findet in der Einrichtung G eine Umsetzung der parallelen Datenstruktur des JEC—BUS e in eine serielle Datenstruktur statt. Damit ist der Aufbau der Wählleitungsverbindung zwischen den Logikanalysatoren und der entfernt installierten Auswertungseinrichtung A möglich.

Findet der Zugriff zu den Logikanalysatoren über Wählleitungen statt, so kann der Zugriff auch von verschiedenen Auswertungseinrichtungen aus erfolgen. So möge z.B. eine Auswertungseinrichtung für eine Gruppe von Logikanalysatoren in einem Wartungszentrum stehen. Das dortige Wartungspersonal sei nun nicht in der Lage, ein Fehlverhalten in dem Vermittlungssystem zu beseitigen. Nach Verständigung der Herstellerfirma kann sich diese mit einer eigenen also mit einer anderen Auswertungseinrichtung über Wählleitung an die Logikanalysatoren anschalten und so weitere Hilfestellung bei der Fehlersuche geben.

Es sei auch noch darauf hingewiesen, daß zweckmäßig auch der Hauptrechner mit einem Logikanalysator ausgestattet ist. Mit diesem kann der gesamte Datenstrom aufgezeichnet werden, der von und/oder zu dem Hauptrechner übertragen wird. Dieser Logikanalysator ist in der gleichen Weise eingesetzt, wie die übrigen Logikanalysatoren und arbeiten ebenzo wie diese.

**Patentansprüche**

1. Schaltungsanordnung für Datenverarbeitungsanlagen, insbesondere in Fernmelde- vorzugsweise Fernsprechvermittlungsanlagen, in denen zur Abwicklung der Vermittlungsvorgänge Multirechnersysteme vorgesehen sind, die jeweils aus einem Hauptrechner (Z), der insbesondere gedoppelt ist, und einer Anzahl Unterrechnern (U1—U5) bestehen, welche im Datenaustausch untereinander und mit dem Hauptrechner (Z) stehen, und deren Zusammenarbeit durch den ihnen übergeordneten Hauptrechner (Z) koordiniert wird, und in denen Logikanalysatoren (L1—L5) vorgesehen sind, die zur Auffindung von Fehlern jeweils den von einem Unterrechner (z.b. U1) ausgehenden und/oder zu ihm hin fließenden Datenstrom aufzeichnen und speichern, wobei durch eine einem Logikanalysator (z.B. L1) vorgebbare Datenkombination dessen Aufzeichnungsvorgang gestartet wird und durch eine im Logikanalysator (z.B. L1) vorgebbare Datenfolge die Übereinstimmung derselben mit dem jeweiligen Datenstrom überprüft und der Aufzeichnungsvorgang auf Grund einer Abweichung beendet wird, dadurch gekennzeichnet, daß einer Mehrzahl von, insbesondere jedem der Unterrechner (U1—U5), gegebenenfalls auch dem Hauptrechner (Z), je ein eigener Logikanalysator (L1—L5) zugeordnet ist, daß eine von einem der Logikanalysatoren (z.B. L1) aus dem betreffenden Datenstrom abgeleitete Startinformation nicht nur bei ihm selbst den Aufzeichnungsvorgang startet, sondern darüber hinaus zu allen anderen Logikanalysatoren (Z) übertragen wird, wodurch auch hier die einzelnen Aufzeichnungsvorgänge gestartet werden, und daß bei Eintreten der Abweichung des Datenstromes von der vorgegebenen Datenfolge an einem Logikanalysator (z.B. L1) nicht nur dessen Aufzeichnungsvorgang beendet wird, sondern ein Beendigungssignal zu jedem der anderen Logikanalysatoren (z.B. L2—L5) übertragen wird, welches dort eine Beendigung jedes der Protokolliervorgänge bewirkt, und daß eine den Unterrechnern (U1—U5) gemeinsame Auswerteeinrichtung (A) entweder ebenfalls dieses Beendigungssignal empfängt und daraufhin oder in regelmäßigen Zeitabständen selbsttätig einzeln nacheinander jedem der Logikanalysatoren (L1—L5) ein Abrufsignal überträgt, woraufhin jeweils nach einem Abrufsignal je ein Logikanalysator (L1—L5) den aufgezeichneten Datenstrom zu der Auswerteeinrichtung (A) überträgt, die jeden dieser Datenströme zu anschließender Auswertung speichert.

2. Schaltungsanordnung nach Anspruch 1, dadurch gekennzeichnet, daß zur Übertragung des Beendigungssignales zu der Auswerteeinrichtung (A) eine Fernmeldeverbindung zu dieser hin von dem betreffenden Logikanalysator (L1—L5) selbsttätig aufgebaut wird.

3. Schaltungsanordnung nach Anspruch 1, dadurch gekennzeichnet, daß die Auswerteeinrichtung (A) selbsttätig zu jedem der Logikanalysatoren (L1—L5) eine Fernmeldeverbindung aufbaut; über diese jeweils das Abrufsignal überträgt und den jeweiligen gespeicherten Datenstrom empfängt.

**Revendications**

1. Montage pour des installations de traitement de données, notamment des installations de télécommunications et de préférence des installations téléphoniques, dans lesquelles pour l'exécution de processus de commutation, il est prévu des systèmes à multicalculateur, qui sont constitués chacun par un calculateur principal (Z), qui est notamment doublé, et par un nombre de calculateurs secondaires (U1—U5) qui échangent des données entre eux et avec le calculateur-principal (Z) et dont le travail en coopération est coordonné par le calculateur principal (Z), qui est de rang supérieur par rapport à ces calculateurs et dans lesquels il est prévu des analyseurs logiques (L1—L5) qui, pour la détection d'erreurs, enregistrent et mémorisent respectivement le flux de données partant d'un calculateur secondaire comme (U1) et/ou le flux de données aboutissant à ce calculateur, auquel cas le processus d'enregistrement de l'analyseur logique (par exemple L1) est déclenché par une combinaison de données pouvant être prédéterminées par cet analyseur et la coïncidence entre une suite de données pouvant être prédéterminées dans l'analyseur logique (par exemple L1) avec le flux respectif de données est contrôlé au moyen de ladite suite et le processus d'enregistrement est arrêté dans le cas d'une différence, caractérisé par le fait que des analyseurs logiques particuliers (L1—L5) sont associés respectivement à une multiplicité de calculateurs secondaires (U1—U5) notamment à chacun de ces calculateurs secondaires, et éventuellement aussi au calculateur principal (Z), une information de démarrage, dérivée du flux considéré de données par l'un des analyseurs logiques (par exemple L1) non seulement déclenche le processus d'enregistrement dans ce même analyseur, mais en outre est transmise à tous les autres analyseurs logiques (Z), ce qui provoque ici également le déclenchement des différents processus d'enregistrement, et que lors de l'apparition de la différence entre le flux de données et la suite prédéterminée de données dans un analyseur logique (par exemple L1), non seulement le processus d'enregistrement de cet analyseur est arrêté, mais également un signal de fin est transmis à chacun des autres analyseurs logiques (par exemple L2—L5), qui réalisent alors un arrêt de chacun des processus de travail en liste, et qu'un dispositif d'exploitation (A) commun aux calculateurs secondaires (U1—U5) reçoit également ce signal de fin et transmet ensuite ou à des intervalles de temps réguliers et de façon automatique un signal d'appel et ce individuellement et successivement aux différents analyseurs logiques (L1—L5), à la suite de quoi, respectivement après un signal d'appel, un alyseur logique respectif (L1—L5) retransmet le flux de données enregistré au dispositif d'exploitation (A) qui mémorise ces flux de données en vue d'une exploitation ultérieure.

2. Montage suivant la revendication 1, caractérisé par le fait que pour la transmission du signal de fin au dispositif d'exploitation (A), une liaison de télécommunications est établie automatiquement avec ce dernier à partir de l'analyseur logique (L1—L5) concerné.

3. Montage suivant la revendication 1, caractérisé par le fait que le dispositif d'exploitation (A) établit automatiquement avec chacun des analyseurs logiques (L1—L5) une liaison de télécommunications, par l'intermédiaire de laquelle il transmet respectivement le signal d'appel et il reçoit le flux de données respectivement mémorisé.

**Claims**

1. A circuit arrangement for a data processing system, in particular in telecommunications — preferably telephone exchange systems, in which for the handling of the switching operations multi-computer systems are provided, each of which comprises a main computer (Z) which, in particular, is provided in duplicate, and of a number of subsidiary computers (U1—U5) which exchange data with one another and with the main computer (Z), and the co-operation of which is co-ordinated by the superordinate main computer (Z), and in which logic analysers (L1—L5) are provided which, in order to discover errors, each record and store the data flow which emanates from and/or flows towards a subsidiary computer (e.g. U1), where, by means of a data combination which can be imposed upon the logic analyser (e.g. L1), the recording thereof is started, and, by means of a data sequence which can be specified in the logic analyser (L1), it is checked that this data sequence is identical to the data flow in question and on the basis of a deviation the recording operation is ended, characterised in that a plurality of, and in particular each of the subsidiary computers (U1—U5), — and possibly also the main computer (Z) — are each assigned an individual logic analyser (L1—L5), that an item of start information derived from one of the logic analysers (e.g. L1) from the data flow in question not only starts the recording operation in this analyser itself, but is also transferred to all the other logic analysers (Z), as a result of which the individual recording operations are started therein, and that when the deviation occurs in the data flow relative to the predetermined data sequence in a logic analyser (e.g. L1), not only is the recording operation of this analyser ended, but also a termination signal is transferred to each of the other logic analysers (e.g. L2—L5) which terminates each of the logging operations therein, and that an analysis device (A) which is common to the subsidiary computers (U1—U5) either likewise receives this termination signal and then, or at regular intervals of time, automatically supplies each of the logic analysers (L1—L5) consecutively with a call signal, whereupon, following a call signal, a logic analyser (L1—L5) transfers the recorded data flow to the analysis device (A) which stores each of these data flows for subsequent analysis.

2. A circuit arrangement as claimed in claim 1, characterised in that for the transfer of the termination signal to the analysis device (A), a telecommunications connection is automatically established thereto from the logic analyser in question (L1—L5).

3. A circuit arrangement as claimed in claim 1, characterised in that the analysis device (A) automatically establishes a telecommunications connection to each of the logic analysers (L1—L5), transfers the call signal via this telecommunications connection, and receives the stored data flow.